(19) Europäisches Patentamt
European Patent Office
Office européen des brevets

(11) Publication number: **0 254 409 B1**

(12) **EUROPEAN PATENT SPECIFICATION**

(45) Date of publication of patent specification: 30.10.91    (51) Int. Cl.⁵: **G10L 5/06**

(21) Application number: 87305087.6

(22) Date of filing: 09.06.87

(54) Speech recognition apparatus and methods.

(30) Priority: 25.07.86 GB 8618193

(43) Date of publication of application:
27.01.88 Bulletin 88/04

(45) Publication of the grant of the patent:
30.10.91 Bulletin 91/44

(84) Designated Contracting States:
**DE ES FR IT NL**

(56) References cited:

COMPUTER DESIGN, vol. 22, no. 7, June 1983,
pages 128-131, Winchester, Massachusetts,
US; A. DAVIS et al.: "Advanced data acquisi-
tion aids the handicapped"

PROCEEDINGS OF THE IEEE COMPUTER SO-
CIETY CONFERENCE ON COMPUTER VISION
AND PATTERN RECOGNITION, San Francisco, 19th-23rd June 1985, pages 40-47,
IEEE; E.D. PETAJAN: "Automatic lipreading
to enhance speech recognition"

Idem

JOURNAL OF ACOUSTICAL SOCIETY OF
AMERICA, vol. 38, no. 5, 1965, pages 790-796;

W.A. HILLIX et al.: "Computer recognition of
spoken digits based on six nonacoustic
measures"

(73) Proprietor: **Smiths Industries Public Limited
Company**
765, Finchley Road
London, NW11 8DS(GB)

(72) Inventor: **Taylor, Michael Robinson**
Southway 23 Butts Road
Chiseldon Swindon Wiltshire(GB)

(74) Representative: **Flint, Jonathan McNeill**
SMITHS INDUSTRIES PUBLIC LIMITED COM-
PANY 765 Finchley Road
London NW11 8DS(GB)

## Description

This invention relates to speech recognition apparatus of the kind including an optical device mounted to view a part at least of the mouth of a speaker, the optical device providing an output that varies with movement of the speaker's mouth, a microphone that derives an output in respect of the sound produced by the speaker and a processing unit that derives from the output of the optical device and the microphone information as to the speech sounds made by the speaker. Such an apparatus is known, for example, from PROCEEDINGS OF THE IEEE COMPUTER VISION AND PATTERN RECOGNITION, San Francisco 19th - 23rd June 1985, pages 40-47; E. D. PETAJAN: "Automatic lipreading to enhance speech recognition".

In complex equipment having multiple functions it can be useful to be able to control the equipment by spoken commands. This is also useful where the user's hands are occupied with other tasks or where the user is disabled and is unable to use his hands to operate conventional mechanical switches and controls.

The problem with equipment controlled by speech is that speech recognition can be unreliable, especially in noisy environments. This can lead to failure to operate or, worse still, to incorrect operation.

Speech signal processing can also be used in communication systems, where the speech input is degraded by noise, to improve the quality of speech output. This generally involves filtering and signal enhancement but usually results in some loss of the speech information where high noise is present.

It is the object of the present invention to provide speech recognition apparatus and methods that can be used to improve speech handling.

According to one aspect of the present invention there is provided speech recognition apparatus of the above-specified kind, characterised in that a laryngograph responsive to changes in impedance to electromagnetic radiation during movement of the vocal folds such as thereby to derive information regarding the voiced sounds is also included, whereby the output from the laryngograph is used in said processing unit to improve identification of the speech sounds in combination with said output of the optical device and microphone.

The output of the microphone and the laryngograph are preferably combined in order to identify sound originating from the speaker and sound originating from external sources, the apparatus including a first store containing information of a reference vocabulary of sound signal information, a first pattern matching unit connected to the store and connected to receive the output of the microphone after rejecting signals associated with sounds originating from external sources. The apparatus may include a second store containing information of a reference vocabulary of visual characteristics of the speaker's mouth, a second pattern matching unit that selects the closest match between the output of the optical device and the vocabulary in the second store, and a comparator that receives the outputs of the first and second pattern matching units and provides an output representative of the most probable speech sounds made in accordance therewith. The apparatus may include a circuit that modifies the output of the microphone which may be modified by the output of the second pattern matching unit, the output of the microphone being supplied to the first pattern matching unit after modification by the second pattern matching unit.

Speech recognition apparatus and its method of operation, in accordance with the present invention, will now be described, by way of example, with reference to the accompanying drawings, in which:

Figure 1    is a side elevation view of a user wearing a breathing mask;

Figure 2    is a front elevation view of the mouth of the user;

Figure 3    illustrates schematically the apparatus;

Figure 4    illustrates schematically alternative apparatus.

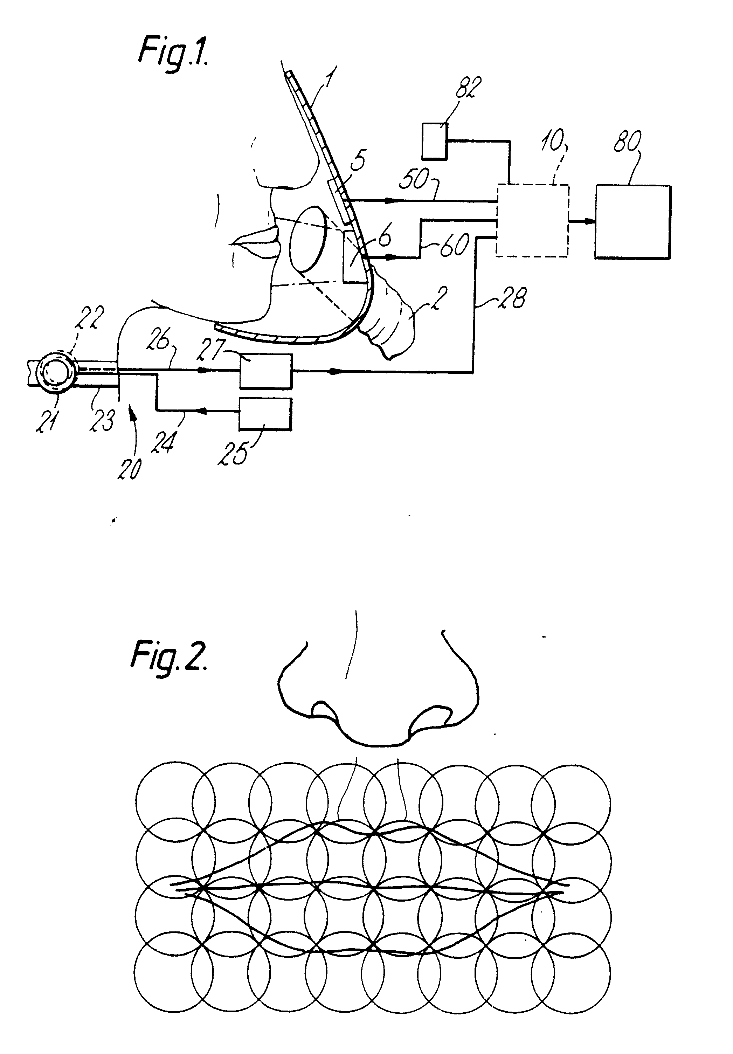

With reference first to Figures 1 and 2, there is shown a speaker wearing a breathing mask 1 having an air supply line 2 that opens into the mask on the side. An exhaust valve, not shown, is provided on the other side in the conventional way. The mask 1 also supports a microphone 5 that is located to detect speech by the user and to supply electrical output signals on line 50, in accordance with the speech and other sounds within the mask, to a speech recognition unit 10.

Also mounted in the mask 1 is a small, lightweight CCD television camera 6 which is directed to view the region of the user's mouth including an area immediately around the mouth, represented by the pattern in Figure 2. Preferably, the camera 6 is response to infra-red radiation so that it does not require additional illumination. Alternatively, the camera 6 may be responsive to visible or ultraviolet radiation if suitable illumination is provided. Signals from the camera 6 are supplied via line 60 to the speech recognition unit 10.

The speech recognition apparatus also includes a laryngograph 20 of conventional construction such as described in ASHA Reports 11, 1981, p 116 - 127. The laryngograph 20 includes two electrodes 21 and 22 secured to the skin of the user's throat by means of a neck band 23. The electrodes 21 and 22 are located on opposite sides of the neck, level with the thyroid cartilage. Each electrode 21 and 22 is flat and circular in shape being between 15 and 30mm in diameter, with a central circular plate and a surrounding annular guard ring insulated from the central plate. One electrode 21 is connected via a coaxial cable 24 to a supply unit 25 which applies a 4MHz transmitting voltage between the central plate and guard ring of the electrode. Typically, about 30mW is dissipated at the surface of the user's neck. The other electrode 22 serves as a current pick-up. Current flow through the user's neck will vary according to movement of the user's vocal folds. More particularly, current flow increases (that is, impendance decreases) when the area of contact between the vocal folds increases, although movement of the vocal folds which does not vary the area of contact will not necessarily produce any change in current flow.

The output from the second electrode 22 is supplied on line 26 to a processing unit 27. The output signal is modulated according to the frequency of excitation of the vocal tract and thereby provides information about phonation or voiced speech, of the user. This signal is unaffected by external noise and by movement of the user's mouth and tongue. The processing unit 27 provides an output signal on line 28 in accordance with the occurrence and frequency of voiced speech, this signal being in a form that can be handled by the speech recognition unit 10.

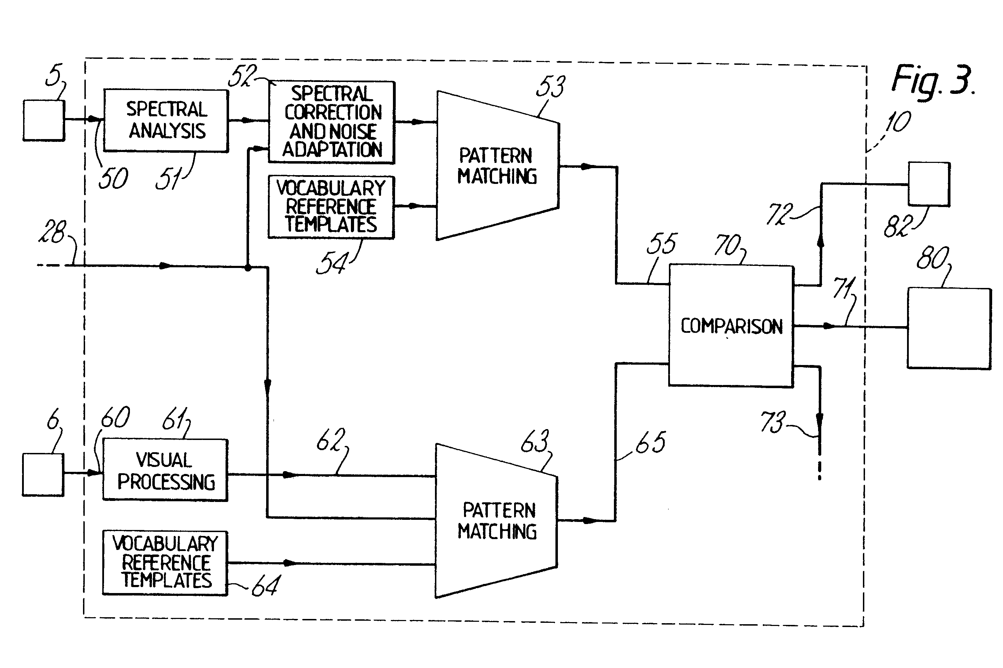

With reference now also to Figure 3, signals from the microphone 5 are first supplied to a spectral analysis unit 51 which produces output signals in accordance with the frequency bands within which the sounds falls. These signals are supplied to a spectral correction and noise adaptation unit 52 which improves the signal to noise ratio or eliminates, or marks, those speech signals that have been corrupted by noise. The spectral correction unit 52 also receives input signals from the laryngograph 20 on line 28. These signals are used to improve the identification of speech sounds. For example, if the microphone 5 receives signals which may have arisen from voiced speech (that is, speech with sound produced by vibration of the vocal folds) or from external noise, which produces sounds similar to phonemes $|z|$ in 'zero' or $|i|$ in 'hid' but there is no output from the laryngograph 20, then the sound can can only have arisen either from noise or from another class of sound corrupted by noise and is consequently marked as such. Output signals from the unit 52 are supplied to one input of a pattern matching unit 53. The other input to the pattern matching unit 53 is taken from a store 54 containing information form a reference vocabulary of sound signal information in the form of pattern templates or word models of the frequency/time patterns or state descriptions of different words. The pattern matching unit 53 compares the frequency/time patterns derived from the microphone 5 with the stored vocabulary and produces an output on line 55 in accordance with the word which is the most likely fit for the sound received by the microphone. The output may include information as to the probability that the word selected from the vocabulary is the actual word spoken. The output may also include signals representing a plurality of the most likely words actually spoken together with their associated probabilities.

The part of the unit 10 which processes the optical information from the camera 6 includes a visual processing unit 61 which receives the camera outputs. The visual processing unit 61 analyses the input signals to identify key characteristics of the optical speech patterns or optical model states from the visual field of the camera, such as, for example, lip and teeth separation and lip shape. In this respect, well-known optical recognition techniques can be used.

The visual processing unit 61 supplies output signals on line 62 to one input of a pattern matching unit 63. A second input to the pattern matching unit 63 is taken from a store 64 containing information of a reference vocabulary in the form of templates of the key visual characteristics of the mouth. Signals from the laryngograph 20 on line 28 are supplied to a third input of the pattern matching unit 63 to improve identification of the word spoken. The output of the laryngograph 20 is used to resolve situations where there is ambiguity of the sound produced from observation of mouth movement alone. For example, the sounds $|s|$ and $|z|$ will produce the same output from the visual processing unit 61, but only the sound $|z|$ will produce an output from the laryngograph 20. This thereby enables the pattern matching unit 63 to select the correct sound of the two alternatives. Similarly, some sounds which have the same mouth shape can be identified in the pattern matching unit 63 because they are produced with voicing (phonation) of different frequencies. The pattern matching unit 63 provides an output on line 65 in accordance with the word that best fits the observed mouth movement. The output may also include information as to the probability that the word selected from the vocabulary is the actual word spoken. The output may also include signals representing a plurality of the most likely words actually spoken with their associated probabilities.

The outputs from the two pattern matching circuits 53 and 63 are supplied to a comparison unit 70 which may function in various way. If both inputs to the comparison unit 70 indicate the same word then the comparison unit produces output signals representing that word on line 71 to a control unit 80 or other untilisation means. If the inputs to the comparison unit 70 indicate different words, the unit responds by selecting the word with the highest associated probability. Where the pattern matching units 53 and 63 produce outputs in respect of a plurality of the most likely words spoken, the comparison unit acts to select the word with the highest total probability. The comparison unit 70 may be arranged to give signals from one or other of the pattern matching units 53 or 63 a higher weighting than the other when selecting between conflicting inputs.

If the comparison unit 70 fails to identify a word with sufficiently high probability it supplies a feedback output on line 72 to a feedback device 82 giving information to the user which, for example, prompts him to repeat the word, or asks him to verify that a selected word was the word spoken. The feedback device 82 may generate an audible or visual signal. A third output on line 73 may be provided to an optional syntax selection unit (not shown) which is used in a known way to reduce the size of the reference vocabulary for subsequent words.

The output signals on line 71 are supplied to the control unit 80 which effects control of the selected function in accordance with the words spoken.

In operation, the user first establishes the reference vocabulary in stores 54 and 64 by speaking a list of words. The apparatus then stores information derived from the sound, voicing and mouth movements produced by the spoken list of words for use in future comparison.

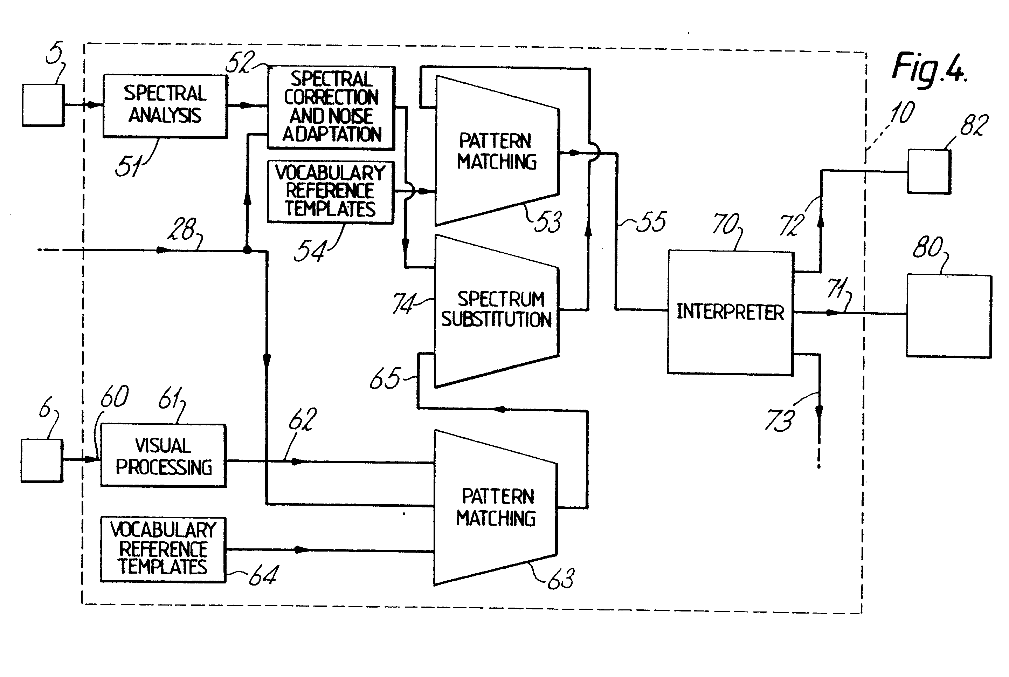

A modification of the apparatus of Figure 3 is shown in Figure 4. In this modification it will be seen that a spectrum substitution unit 74 is interposed between the spectral correction and noise adaptation unit 52 and the pattern matching unit 53. This modification operates to substitute only short-term corrupted speech spectra with a 'most-likely' description of uncorrupted short-term spectra. When the noise detection process carried out by unit 52 indicates that the acoustic spectrum output from the analysis unit 51 has been corrupted by noise, a clean spectrum most likely to be associated with the visual pattern detected by the pattern matching unit 63 is supplied to the input of the unit 53 via a spectrum substitution unit 74 in place of the noisy spectrum otherwise supplied by the unit 52. The spectrum substitution unit 74 transforms the optical pattern recognised by the pattern matching unit 63 into an acoustic pattern with the same structure as the patterns produced at the outputs of the units 51 and 52.

In the present invention, although noise may severly degrade the quality of the sound signal making acoustic recognition of the spoken words impossible, the optical output derived from the camera 6 and the output of the laryngograph 20 will not be affected and this can be used to make a positive recognition. The invention is therefore particularly useful in noisy environments such as factories, vehicles, quarries, underwater, commodity or financial dealing markets and so on.

In some circumstances it may not be necessary to use a microphone since the optical signal and laryngograph outputs may be sufficient to identify the words spoken.

Various alternative optical means could be used to view the user's mouth. In one example, the end of a fibre-optic cable may be located in the breathing mask and a television camera mounted remotely at the other end of the cable. Alternatively, an array of radiation detectors may be mounted in the breathing mask or remotely via fibre-optic cables to derive signals in accordance with the position and movement of the user's mouth.

Instead of using a laryngograph which detects movement of the vocal folds by change in impedance to transmission of high frequency electromagnetic radiation, various alternative voicing sensing means could be used. For example, it may be possible to sense voicing by ultrasound techniques.

Where the user does not wear a breathing mask, the optical device can be mounted with his head by other means, such as in a helmet, or on the microphone boom of a headset. It is not essential for the optical device to be mounted with the user's head although this does make it easier to view the mouth since the optical field will be independent of head movement. Where the optical device is not mounted on the user's head, additional signal processing will be required to identify the location of the user's mouth. The laryngograph electrodes could be mounted on an extended collar of the user's helmet.

It will be appreciated that the blocks shown in Figure 3 are only schematic and that the functions carried out by the blocks illustrated could be carried out by suitable programming of a single computer.

**Claims**

1. Speech recognition apparatus, including an optical device (6) mounted to view a part at least of the mouth of a speaker, the optical device providing an output that varies with movement of the speaker's mouth, a microphone (5) that derives an output in respect of the sound produced by the speaker and a processing unit (10) that derives from the output of the optical device (6) and the microphone (5) information as to the speech sounds made by the speaker, characterised in that a laryngograph (20) responsive to changes in impedance to electromagnetic radiation during movement of the vocal folds such as thereby to derive information regarding the voiced sounds is also included, whereby the output from the laryngograph (20) is used in said processing unit (10) to improve identification of the speech sounds in combination with said output of the optical device (6) and microphone (5).

2. Speech recognition apparatus according to Claim 1, characterised in that the output of the microphone (5) and the laryngograph (20) are combined in order to identify sound originating from the speaker and sound originating from external sources, that the apparatus includes a first store (54) containing information of a reference vocabulary of sound signal information, a first pattern matching unit (53) connected to the store (54) and connected to receive the output of the microphone (5) after rejecting signals associated with sounds originating from external sources.

3. Speech recognition apparatus according to Claim 2, characterised in that the apparatus includes a second store (64) containing information of a reference vocabulary of visual characteristics of the speaker's mouth, a second pattern matching unit (63) that selects the closest match between the output of the optical device (6) and the vocabulary in the second store (64), and a comparator (70) that receives the outputs of the first and second pattern matching units (53 and 63) and provides an output representative of the most probable speech sounds made in accordance therewith.

4. Speech recognition apparatus according to any one of the preceding claims, characterised in that the apparatus includes a circuit (63, 74) that modifies the output of the microphone (5).

5. Speech recognition apparatus according to Claim 4, characterised in that the output of the microphone (5) is modified by the output of the second pattern matching unit (63) and that the output of the microphone (5) is supplied to the first pattern matching unit (53) after modification by the second pattern matching unit (63).

**Revendications**

1. Appareil de reconnaissance de la parole, comportant un dispositif optique (6) monté de façon à viser au moins une partie de la bouche d'un orateur, le dispositif optique délivrant un signal de sortie qui varie avec les mouvements de la bouche de l'orateur, un microphone (5) qui délivre un signal de sortie correspondant au son produit par l'orateur, et une unité de traitement (10) qui délivre, à partir des signaux de sortie du dispositif optique (6) et du microphone (5), des informations relatives aux sons vocaux émis par l'orateur, caractérisé en ce qu'il comprend aussi un laryngographe (20) sensible à des variations d'impédance à l'égard d'un rayonnement électromagnétique pendant des mouvements des cordes vocales, de façon à délivrer des informations relatives aux phonèmes sonores, le signal de sortie du laryngographe (20) étant utilisé dans ladite unité de traitement (10) pour améliorer l'identification des sons vocaux en combinaison avec lesdits signaux de sortie du dispositif optique (6) et du microphone (5).

2. Appareil de reconnaissance de la parole selon la revendication 1, caractérise en ce que les signaux de sortie du microphone (5) et du laryngographe (20) sont combinés afin d'identifier le son provenant de l'orateur et le son provenant de sources extérieures, en ce que l'appareil comporte une première mémoire (54) contenant des informations relatives à un vocabulaire de référence d'informations de signaux sonores, une première unité de concordance de motifs (53), raccordée à la mémoire (54) et branchée de manière à recevoir le signal de sortie du microphone (5) après rejet de signaux associés à des sons provenant de sources extérieures.

3. Appareil de reconnaissance de la parole selon la revendication 2, caractérisé en ce qu'il comporte une seconde mémoire (64) contenant des informations d'un vocabulaire de référence de caractéristiques visuelles de la bouche de l'orateur, une seconde unité de concordance de motifs (63) qui sélectionne la concordance la plus étroite entre le signal de sortie du dispositif optique (6) et le vocabulaire contenu dans la seconde mémoire (64), et un comparateur (70) qui reçoit les signaux de sortie de la première et de la seconde unité de concordance de motifs (53 et 63) et qui délivre un signal de sortie représentatif des sons vocaux les plus probables d'après ces unités.

4. Appareil de reconnaissance de la parole selon l'une des revendications précédentes, caractérisé en ce qu'il comporte un circuit (63, 74) qui modifie le signal de sortie du microphone (5).

5. Appareil de reconnaissance de la parole selon la revendication 4, caractérisé en ce que le signal de sortie du microphone (5) est modifié par le signal de sortie de la seconde unité de concordance de motifs (63) et en ce que le signal de sortie du microphone (5) est délivré à la première unité de concordance de motifs (53) après sa modification par la seconde unité de concordance de motifs (63).

**Patentansprüche**

1. Spracherkennungsvorrichtung, beinhaltend ein optisches Gerät (6), welches so angebracht ist, daß es zumindest einen Teil des Munds des Sprechers aufnimmt und ein Ausgangssignal erzeugt, welches sich mit der Mundbewegung des Sprechers ändert, ein Mikrofon (5), welches ein Ausgangssignal erzeugt bezüglich des vom Sprecher erzeugten Schalls und eine Verarbeitungseinheit (10), welche aus den Ausgangssignalen des optischen Geräts (6) und des Mikrofons (5) Information ableitet bezüglich des vom Sprecher erzeugten Sprachklangs, **dadurch gekennzeichnet,** daß sie auch einen Laryngographen (20) beinhaltet, welcher empfindlich ist auf Impedanzänderungen gegenüber elektromagnetischer Strahlung während der Bewegung der Stimmbänder, um so Information bezüglich der gesprochenen Klänge abzuleiten, wobei das Ausgangssignal des Laryngographen (20) in der genannten Verarbeitungseinheit (10) verwendet wird, um die Identifizierung der Sprachklänge in Kombination mit den Ausgangssignalen des optischen Geräts (6) und des Mikrofons (5) zu verbessern.

2. Spracherkennungsvorrichtung nach Anspruch 1, **dadurch gekennzeichnet,** daß die Ausgangssignale des Mikrofons (5) und des Laryngographen (20) kombiniert werden, um Klänge des Sprechers und Klänge von äußeren Quellen zu identifizieren, daß die Vorrichtung beinhaltet einen ersten Speicher (54), welcher die Information eines Bezugsvokabulars von Klangsignalinformationen enthält, eine erste Musteranpassungseinheit (53), die an den Speicher (54) und zum Empfang des Ausgangssignals des Mikrofons (5) angeschlossen ist, nachdem Signale, welche von äußeren Quellen herrühren, ausgesondert wurden.

3. Spracherkennungsvorrichtung nach Anspruch 2, **dadurch gekennzeichnet,** daß die Vorrichtung beinhaltet einen zweiten Speicher (64) mit Information eines Bezugsvokabulars visueller Charakteristika des Munds des Sprechers, eine zweite Musteranpassungseinheit (63), welche die beste Anpassung zwischen dem Ausgangssignal des optischen Geräts (6) und dem Vokabular in dem zweiten Speicher (64) auswählt, und eine Vergleichseinheit (70), welche die Ausgangssignale der ersten und zweiten Musteranpassungseinheiten (53 und 63) empfängt und ein Ausgangssignal erzeugt, welches repräsentativ für die wahrscheinlichsten Sprachklänge ist und diesen entsprechend hergestellt wird.

4. Spracherkennungsvorrichtung nach einem der voranstehenden Ansprüche, **dadurch gekennzeichnet,** daß die Vorrichtung einen Schaltkreis (63,74) beinhaltet, welcher das Ausgangssignal des Mikrofons (5) modifiziert.

5. Spracherkennungsvorrichtung nach Anspruch 4, **dadurch gekennzeichnet,** daß das Ausgangssignal des Mikrofons (5) durch das Ausgangssignal der zweiten Musteranpassungseinheit (63) modifiziert wird und daß das Ausgangssignal des Mikrofons (5) nach der Modifikation durch die zweite Musteranpassungseinheit (63) der ersten Musteranpassungseinheit (53) zugeführt wird.

Fig.1.

Fig.2.

Fig. 3.

8

Fig.4.

EP 0 254 409 B1